(19) Europäisches Patentamt / European Patent Office / Office européen des brevets

(11) **EP 3 371 620 B1**

(12) **EUROPEAN PATENT SPECIFICATION**

(45) Date of publication and mention
of the grant of the patent:
**24.03.2021 Bulletin 2021/12**

(51) Int Cl.:
*G01S 5/02* (2010.01)          *G01S 5/30* (2006.01)
*G01S 15/87* (2006.01)         *G01S 15/89* (2006.01)
*G01C 21/00* (2006.01)         *G01S 15/06* (2006.01)
*G01S 15/42* (2006.01)         *G05D 1/00* (2006.01)
*G01S 15/02* (2006.01)         *G01S 5/18* (2006.01)
*G01S 7/539* (2006.01)         *H04W 4/02* (2018.01)
*H04W 60/04* (2009.01)         *H04W 64/00* (2009.01)
*H04B 17/318* (2015.01)

(21) Application number: **16805910.3**

(22) Date of filing: **04.11.2016**

(86) International application number:
**PCT/JP2016/083448**

(87) International publication number:
**WO 2017/078181 (11.05.2017 Gazette 2017/19)**

(54) **METHOD FOR REGISTERING LOCATION OF DEVICE AND DEVICE**

VERFAHREN ZUR REGISTRIERUNG DER POSITION EINER VORRICHTUNG UND
VORRICHTUNG

PROCÉDÉ D'ENREGISTREMENT D'UNE POSITION D'UN DISPOSITIF, ET DISPOSITIF

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **06.11.2015 US 201514935054**

(43) Date of publication of application:
**12.09.2018 Bulletin 2018/37**

(73) Proprietor: **Mitsubishi Electric Corporation
Chiyoda-ku
Tokyo 100-8310 (JP)**

(72) Inventors:
• **ORLIK, Philip**
  **Cambridge, Massachusetts 02139 (US)**
• **MOLISCH, Andreas**
  **Cambridge, Massachusetts 02139 (US)**

(74) Representative: **Pfenning, Meinig & Partner mbB
Patent- und Rechtsanwälte
Theresienhöhe 11a
80339 München (DE)**

(56) References cited:
WO-A1-2013/108243     CN-A- 101 526 601
US-A1- 2008 157 970   US-A1- 2010 090 899
US-A1- 2014 253 389   US-A1- 2014 269 193

• MING YANG ET AL: "Localization of Plane
Reflectors Using a Wide-Beamwidth Ultrasound
Transducer Arrangement", IEEE
TRANSACTIONS ON INSTRUMENTATION AND
MEASUREMENT, IEEE SERVICE CENTER,
PISCATAWAY, NJ, US, vol. 46, no. 3, 1 June 1997
(1997-06-01), XP011024291, ISSN: 0018-9456
• JONG HWAN LIM ET AL: "MOBILE ROBOT
RELOCATION FROM ECHOLOCATION
CONSTRAINTS", IEEE TRANSACTIONS ON
PATTERN ANALYSIS AND MACHINE
INTELLIGENCE, IEEE COMPUTER SOCIETY,
USA, vol. 22, no. 9, 1 September 2000
(2000-09-01), pages 1035-1041, XP000976481,
ISSN: 0162-8828, DOI: 10.1109/34.877524

**Description**

[Technical Field]

The invention relates generally to indoor localization, and more particularly to unsupervised localization of a device using augmentation of received signal strength (RSS) measurements.

[Background Art]

Wireless networks, such as wireless local area networks (WLANs) are widely used. Locating radios in a wireless communication network such as a WLAN enables new and enhanced features, such as location-based services and location-aware management. Location-based services include, for example, locating or tracking of a wireless device, assigning a device, e.g., a closest printer to a wireless station of a WLAN, and controlling the wireless device based on its location.

Accurate indoor localization using a satellite based Global Positioning System (GPS) is difficult to achieve because the GPS signals are attenuated when the signals propagate through obstacles, such as roof, floors, walls and furnishing. Consequently, the signal strength becomes too low for localization in indoor environments.

Concurrently, the enormous growth of WiFi radio frequency (RF) chipsets embedded within different devices, such as computers, smartphones, stereos, and televisions, prompt a need for indoor location methods for WiFi equipped devices based on, or leveraging, existing WiFi signals, i.e., any signal based on the Electrical and Electronics Engineers' (IEEE) 802.11 standard. For example, WiFi technology allows electronic devices to network, mainly using the 2.4 gigahertz (12 cm wavelength) UHF and 5.8 gigahertz (5.1 cm wavelength) SHF radio bands.

Some methods for indoor localization use signal strength measurement and assume that the received signal power is an invertible function of the distance, thus knowledge of the received power implies a distance from the transmitter of the signal. Other methods attempt to make further use of the large scale deployment of WiFi devices along with advances in machine learning and propose fingerprinting along with self-localization and mapping.

However, the methods that solely rely on conventional Wi-Fi chipsets for indoor localization use measured received signal strength (RSS) levels obtained from the Wi-Fi chipsets. Those methods require training, which includes measuring the RSS levels offline in the indoor environment. The measurements are then supplied to the localization method during online use.

One limitation associated with the training is in that the offline measurements are often unreliable. This is because the RSS levels in the environment vary dynamically over time, for example, due to changes in the number of occupants, the furnishing and locations of the APs. This implies that the training needs to be repeated whenever the environment changes. To that end, even after the training is performed, the location of WiFi devices determined based on the RSS levels is inaccurate for some applications.

Therefore, it is desired to perform RSS based localization in an unsupervised manner, i.e., without training, to achieve the localization of the devices with a target accuracy.

US 2010/090899 A1 describes a method for positioning an object with adaptive resolution. The method comprises: dividing a space to be detected into Hot Area and General Area; arranging, according to the positions of Hot Area and General Area, high-resolution positioning signal (US) transceivers and low-resolution positioning signal (RF) transceivers, wherein the detection scope of the low-resolution positioning signal transceivers covers the space and the detection scope of the high-resolution positioning signal transceivers covers the Hot Area; and when the object moving in the space, fusing the detection results from the high-resolution positioning signal transceivers and the low-resolution positioning signal transceivers to determine the position of the object with adaptive resolution.

WO 2013/108243 A1 describes a system for estimating position of a mobile electronic device that is located within a detection space.

US 2008/157970 A1 describes a method for determining the location of a tagged item and, in particular for combining a mobile fine location determination system with a coarse location determination infrastructure in inventory tracking and maintenance applications.

CN 101 526 601 A describes a self-adaptive localization method, equipment and system which adopt a TOA and RSS fusion mode.

US 2014/253389 A1 describes a method to use ultrasonic (US) and WiFi signals to improve range determination between devices in WiFi-based position or range estimation systems.

Document MING YANG ET AL, "Localization of Plane Reflectors Using a Wide-Beamwidth Ultrasound Transducer Arrangement", IEEE TRANSACTIONS ON INSTRUMENTATION AND MEASUREMENT, IEEE SERVICE CENTER, PISCATAWAY, NJ, US, (19970601), vol. 46, no. 3, ISSN 0018-9456, XP011024291 describes a concept for localizing plane reflectors.

US 2014/269193 A1 describes a wireless location identification method.

**EP 3 371 620 B1**

Document JONG HWAN LIM ET AL, "MOBILE ROBOT RELOCATION FROM ECHOLOCATION CONSTRAINTS", IEEE TRANSACTIONS ON PATTERN ANALYSIS AND MACHINE INTELLIGENCE, IEEE COMPUTER SOCIETY, USA, (20000901), vol. 22, no. 9, doi:10.1109/34.877524, ISSN 0162-8828, pages 1035 - 1041, XP000976481 describes a method for relocation of a mobile robot using sonar data.

[Summary of Invention]

It is an object of some embodiments of an invention to provide a system and a method suitable for determining a position of a WiFi equipped device located within an indoor space. It is a further object of some embodiments to determine the position of such a device on a floor plan of the indoor space with the target accuracy, e.g., a margin of errors is less than 2 meters.

The above problems are solved by the subject-matter according to the independent claims. Some embodiments of the invention are based on recognition that localization methods that use strengths of the WiFi signals received from different WiFi transceivers are inaccurate and can provide only a proximate position of the device. However, if the locations of the WiFi transceivers are registered with floor plan of the indoor space, those localization methods can be used to estimate a global position of the device with respect to the floor plan, but with accuracy lower than the target accuracy.

Some embodiments of the invention are based on understanding that the reasons for inaccuracy of the localization using the strengths of the WiFi signals lies, at least in part, in a speed of propagation of the WiFi signals causing large position/range errors even when small time of arrival estimate errors are made.

Accordingly, some embodiments are based on recognition that localization methods that use signals propagating slower than WiFi signal can be used to estimate the position of the device with the target accuracy. For example, a time-of-flight of an acoustic signal can be used to accurately estimate a distance between the two objects.

However, due to the current state of technology, it is not always practical to determine a global location of the device on the floor plan using the acoustic signals. To that end, some embodiments are based on a realization that the accurate distance between the device and at least one object registered with the floor plan can be used to annotate the coarse global location of the device determined using the strengths of the WiFi signals to register the location of the device on the floor plan with the target accuracy.

Accordingly, one embodiment of the invention discloses a method for registering a location of a device with a floor plan of an indoor space. The method includes determining a portion of the floor plan specifying a coarse location of the device using strength of WiFi signals received from at least three access points (APs), wherein a location of each AP is registered with the floor plan;
determining at least one distance between the device and at least one object registered with the floor plan using a time-of-flight of at least one acoustic signal; and registering the location of the device within the portion of the floor plan at the distance from the object. At least some steps of the method are performed using a processor.

Another embodiment of the invention discloses a device including a WiFi transceiver to transmit and to receive WiFi signals, and to determine strength of at least three WiFi signals received from at least three access points (APs), wherein a location of each AP is registered with the floor plan; an acoustic transceiver to transmit and to receive acoustic signals, the acoustic transceiver determines at least one distance between the device and at least one object registered with the floor plan using a time-of-flight of an acoustic signal; and a processor to determine a portion of the floor plan specifying a coarse location of the device using the strengths of the received WiFi signals received from the APs registered with the floor plan, and to register the location of the device within the portion of the floor at the distance from the object.

[Brief Description of the Drawings]

[Fig. 1A]

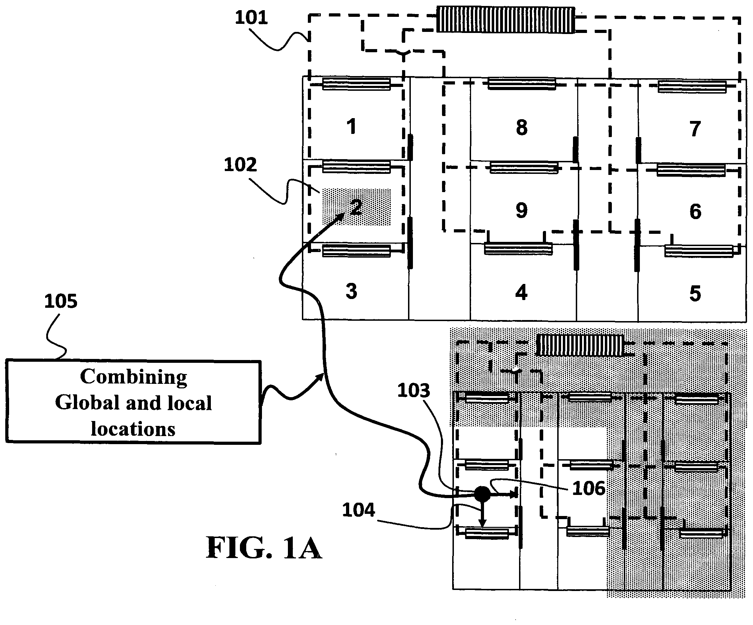

Figure 1A is a schematic illustrating some principles of augmented localization employed by some embodiments of the invention.
[Fig. 1B]

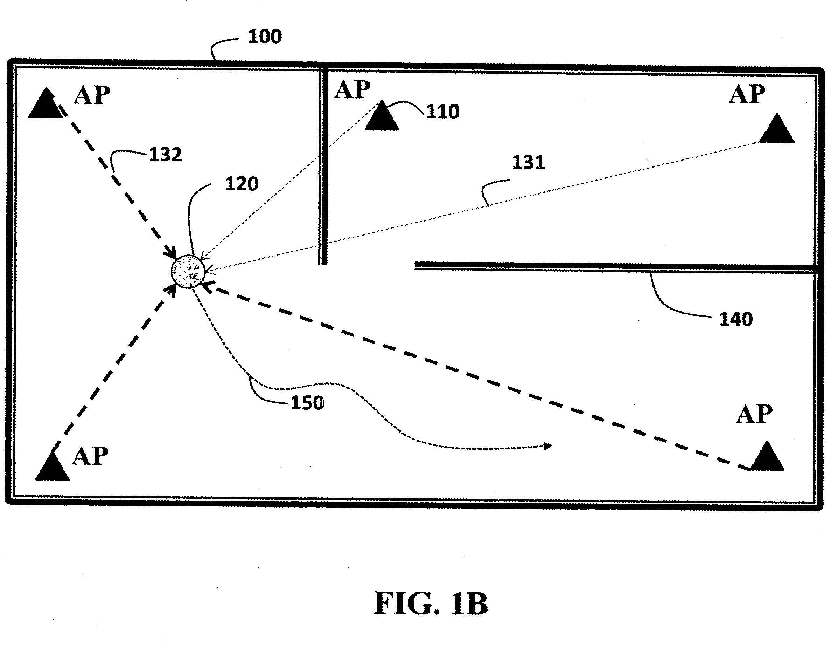

Figure 1B is a schematic of coarse localization using received signal strength (RSS) measurement according to some embodiments of the invention.
[Fig. 1C]

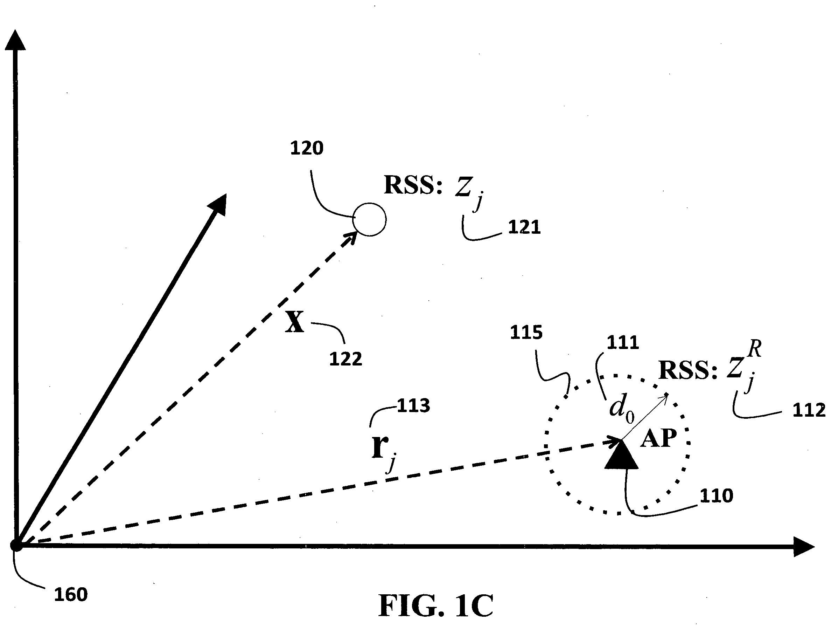

Figure 1C is a schematic of a method for determining location of the device using the RSS levels according to one embodiment of the invention.
[Fig. 1D]

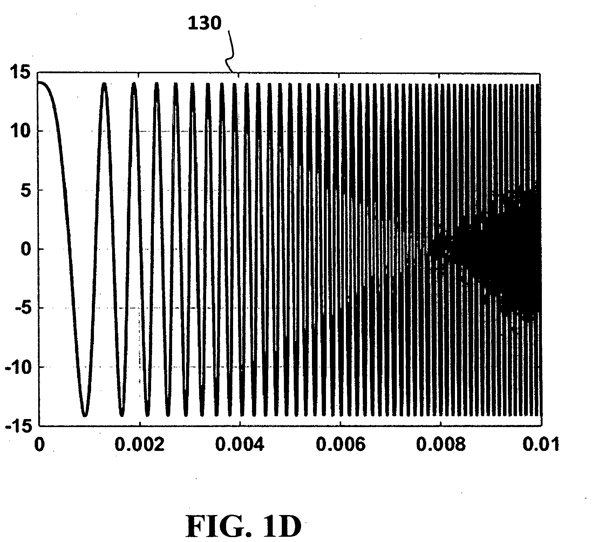

Figure 1D is a schematic of an acoustic signal transmitted by the device to annotate the coarse localization according to one embodiment of the invention.
[Fig. 1E]

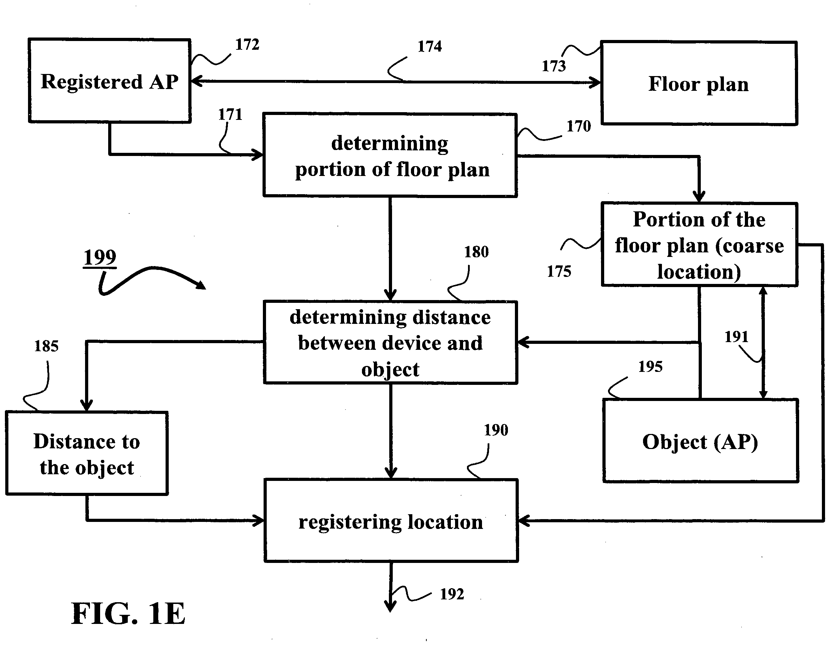

Figure 1E is a block diagram of a method for registering a location of a device with a floor plan of an indoor space according to one embodiment of the invention.
[Fig. 1F]

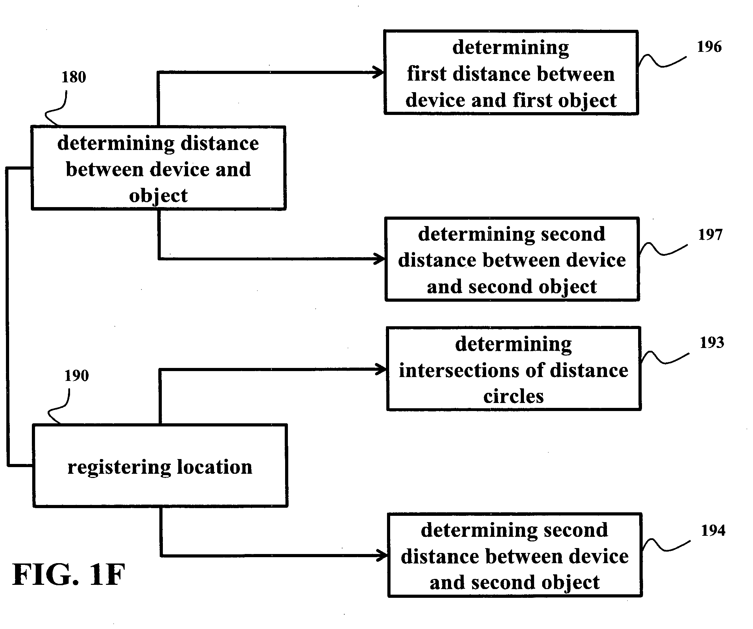

Figure 1F is a block diagram of an exemplar method for determining multiple distance to the device from multiple objects and registering the location of the device using the multiple distances according to one embodiment of the invention.
[Fig. 2]

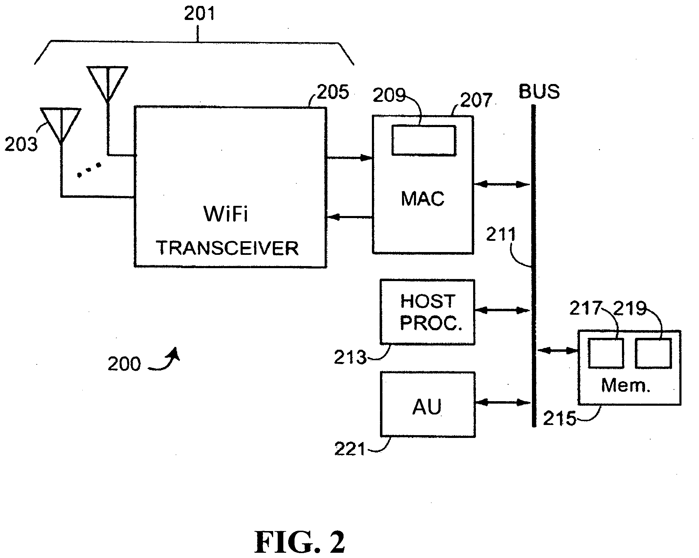

Figure 2 is a block diagram of a device according to some embodiments of the invention.
[Fig. 3A]

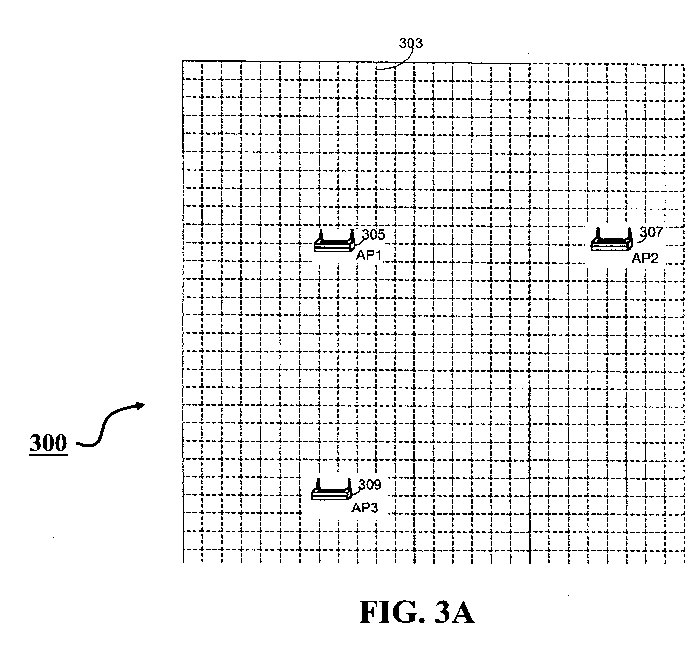

Figure 3A is an example of a user interface that includes a graphic overlay of a grid of area elements.
[Fig. 3B]

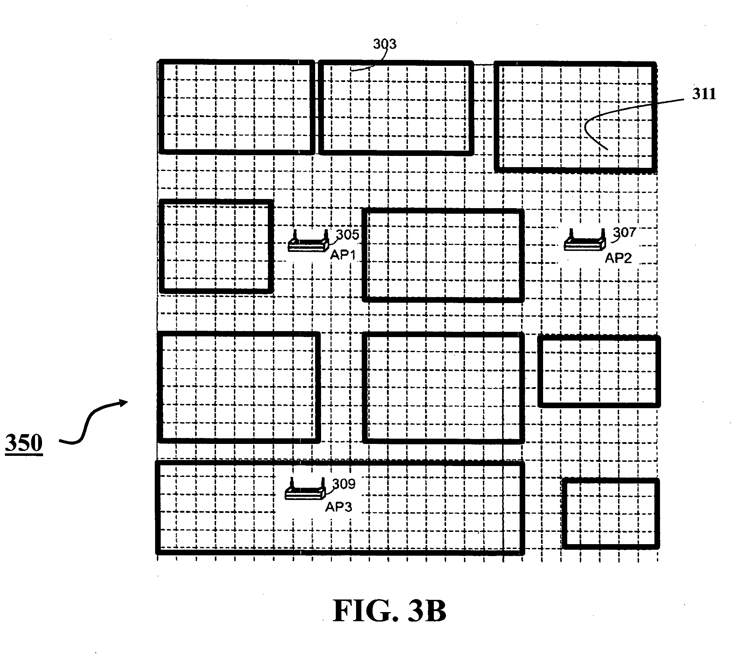

Figure 3B is another example of the user interface that includes a graphic overlay representing the architectural structure of the enclosed environment.
[Fig. 4]

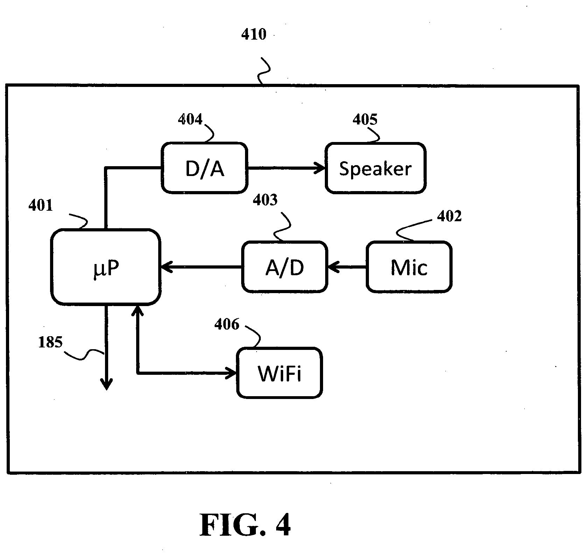

Figure 4 is a schematic of a structure of the device for active ranging according to one embodiment of the invention.
[Fig. 5A]

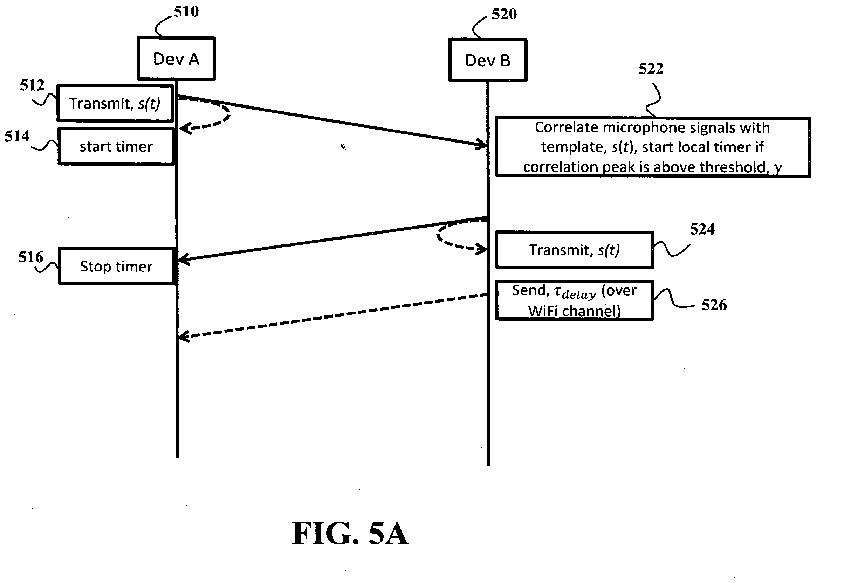

Figure 5A is a schematic of signals exchanged during the active ranging according to one embodiment of the invention.
[Fig. 5B]

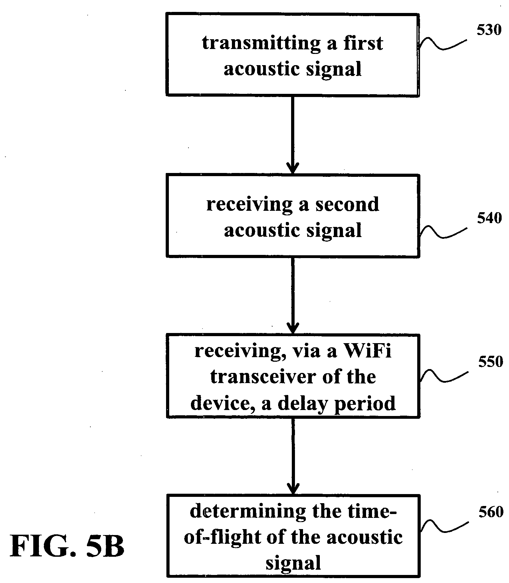

Figure 5B is a block diagram of a method performed by a device for determining the distance using an active ranging according to one embodiment.
[Fig. 6]

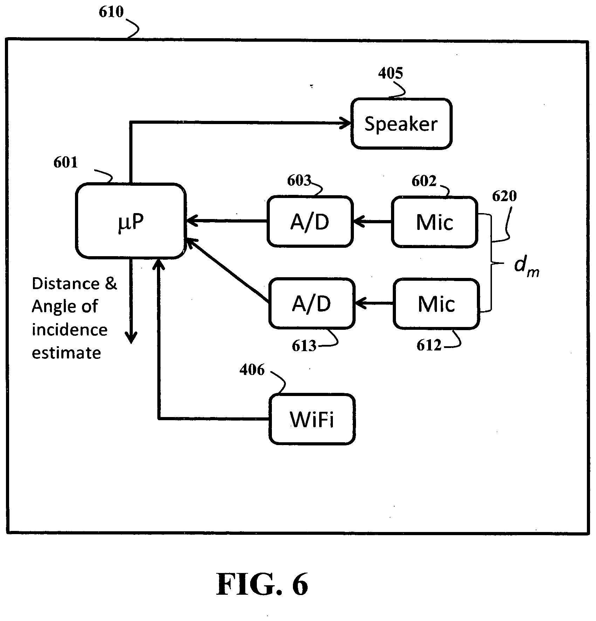

Figure 6 is a schematic of a structure of the device performing the passive ranging according to some embodiments of the invention.
[Fig. 7]

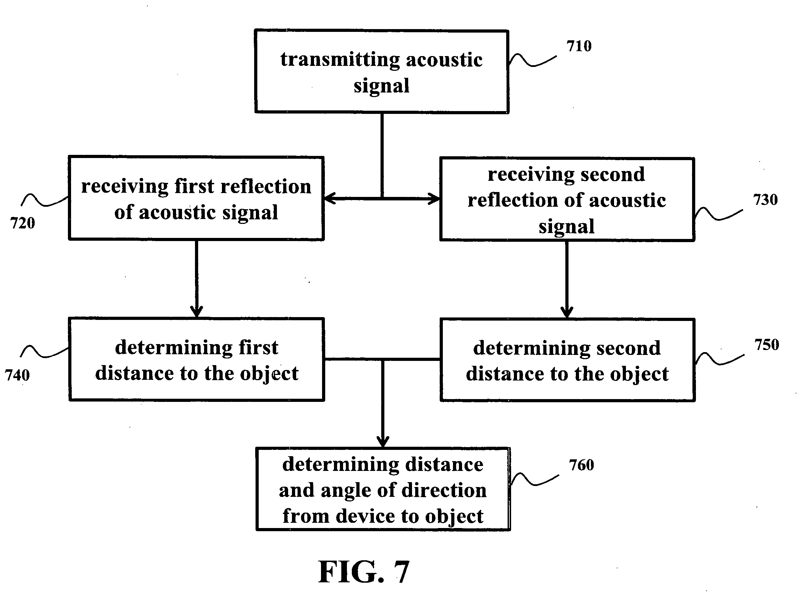

Figure 7 is a block diagram of a method for determining the distance using a passive ranging according to one embodiment of the invention.
[Fig. 8]

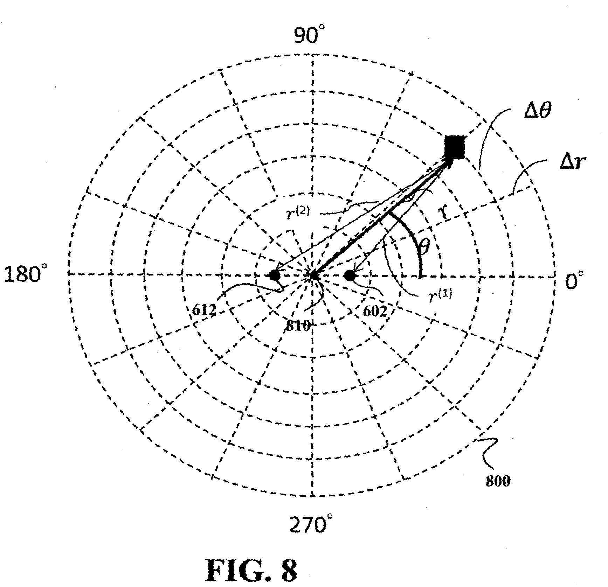

Figure 8 is a schematic of a search for both the distance and the angle of arrival of reflections of the acoustic signal according to one embodiment of the invention to determine.
[Fig. 9]

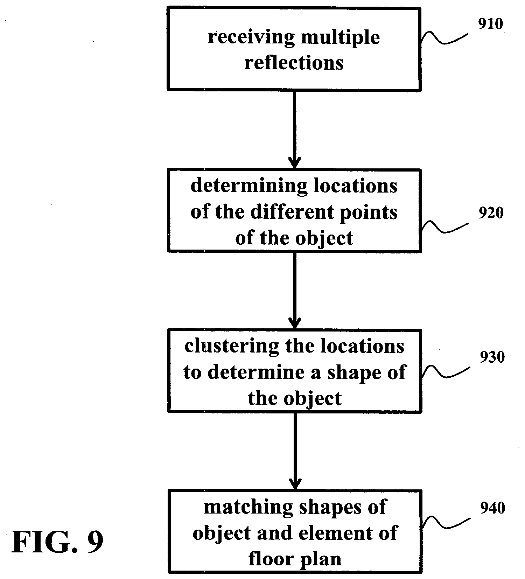

Figure 9 is a block diagram of a method for registering the object with the floor plan according to some embodiments of the invention.
[Fig. 10]

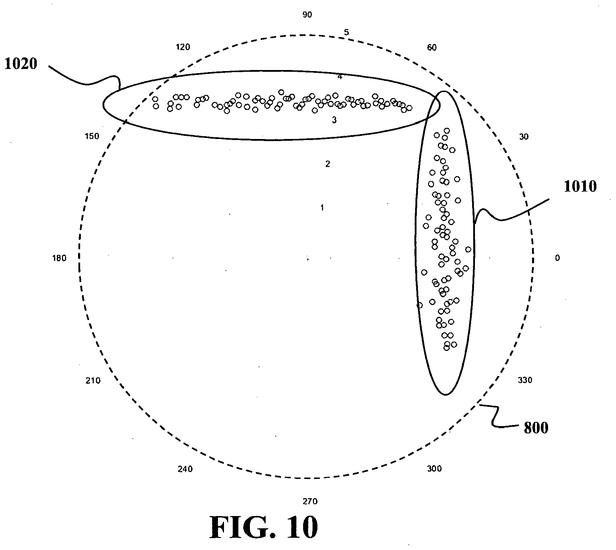

Figure 10 is an exemplar data set representing the locations of the different points of the object with respect to the device according to one embodiment.

[Description of Embodiments]

Figure 1A shows a schematic illustrating some principles of augmented localization employed by some embodiments of the invention. Some embodiments determine a coarse location 102 of a device using the strength of received WiFi signals from the WiFi transceivers. The locations of the WiFi transceivers are registered with a floor plan 101 of an indoor space. Accordingly, the coarse location 102 is a location registered to the floor plan. However, because the coarse location is inaccurate, the location 102 defines a portion of the floor plan rather than the precise location. For example, according to the floor plan 101, the indoor space includes nine rooms sequentially numbered 1, 2, 3, 4, 5, 6, 7, 8 and 9. The coarse location 102 can indicate that the device is located in a room 2 on the floor plan 101, but fails to specify where exactly in the room 2 the device is located.

Accordingly, some embodiments use acoustics signals to determine the location of the device with the target accuracy. For example, some embodiments can determine the accurate location 103 of the device based on distances 104 and 106 from walls of the room. This location 103 is accurate, but local to the room, i.e., the location 103 is registered only with the room, but the location of the room on the floor plan can be unknown. Accordingly, some embodiments of the invention augment WiFi localization with acoustic localization by combining 105 the global location 102 with the local location 103 to determine the location of the device on the floor plan with the target accuracy.

Figure 1B shows a schematic of the coarse localization using received signal strength (RSS) measurement according to some embodiments of the invention. The embodiments determine the location of a device 120 in an enclosed environment 100 using access points (APs) 110. In various embodiments, the device 120 and the APs 110 include WiFi transceivers. The enclosed environment can be, for example, interior of a home, building, underground, even an urban canyon, etc., with multiple obstacles such as walls 140, furnishings, etc. The device can be, for example, a mobile robot, smart phone, portable computer, and a smart phone. In one embodiment the device moves along an unknown path 150. After the location of the device is determined, the device can be controlled according to its current location and/or being used for controlling other devices.

Some embodiments of an invention perform a coarse localization of a device by measuring received signal strength (RSS) levels of signals transmitted by a set of access points (APs) arranged in an enclosed environment. For example, one embodiment uses a path loss model for the RSS level. The log-distance path loss model is a radio propagation model that predicts path loss a signal encounters in an enclosed environment as a function of distance. According to this model, the RSS level of the received reference signals transmitted by a particular AP depends on a distance to the AP and the associated path loss exponent. The path loss exponent is can be define, e.g., based on a type of the enclosed environment 100. Additionally or alternatively, some embodiments use the trilateration intersecting circles defined by the RSS levels, and/or least squares methods to determine the coarse location.

Figure 1C graphically shows a method for determining location of the device 120 using the RSS levels 121 of the reference signals transmitted by the APs 110 according to one embodiment of the invention. The reference signals can be transmitted continuously, periodically, or in response to a localization request by the device. The device is located at an unknown location x 122 in an arbitrary coordinate system 160 associated with the enclosed environment. The coordinate system can be two or three dimensional.

A location of the $j^{\text{th}}$ AP 110 in this coordinate system is denoted as $\mathbf{r}_j$ 113, where $j = 1, ..., N$. The AP $j$ is characterized by reference received signal strength (RSS) level $z_j^R$ 112 at a radial distance $d_0$ 111 from the AP with an accuracy 115. The locations $\mathbf{r}_j$ and the reference RSS levels $z_j^R$ at the distance $d_0$ from the AP are known. The positions of the access points with respect to a coordinate system associated with the enclosed area are known 3-dimensional vectors $\mathbf{r}_1, \mathbf{r}_2, ..., \mathbf{r}_M$. An unknown position is estimated from the measured received signal strength (RSS) levels of the reference signals transmitted from the access points. At some location $x_n$, the measured RSS levels are $z_1(n), z_2(n), ..., z_M(n)$. These measurements are collected into a column vector z(n), where $n = 1, 2, ...$ indexes localization requests along some traversed path.

The RSS level $z_m(n)$ at location $\mathbf{x}_n$ is modeled using the path loss model, given by

$$z_m(n) = z_m^{\text{R}} - 10h_m(n)\log_{10}\frac{\|\mathbf{x}_n - \mathbf{r}_m\|}{d_0} + v_m(n),$$

where $z_m^{(R)}$ is the reference RSS level at distance $d_0$ from the access point at location $\mathbf{r}_m$, $h_m(n)$ is the corresponding path loss exponent, and $v_m(n)$ is zero mean, white, Gaussian measurement noise. Multiple distances 111 from multiple, e.g., three, APs can be used to determine the coarse location of the device. The location estimate based on RSS is typically coarse, e.g., due to path loss model inaccuracies. These inaccuracies arise from material absorption of the RF energy, and multipath interference which are difficult to model since they are environment specific.

Figure 1D shows a schematic of an acoustic signal 130 transmitted by AP 110 and/or the device 120 to annotate the coarse localization according to one embodiment of the invention. In this embodiment, the acoustic signal is a chirpped signal that can be used for location purposes. For example, some implementations use linear chirps which are the acoustic signals whose frequency either increases (up-chirp) or decreases (down-chirp) with time. Such signals are common in radar and sonar applications. In general, however, any acoustic waveform is suitable for the purpose of determining a distance between the transmitter and a receiver when the acoustic waveform is known at both ends of the link.

For example, if the AP and the device have access to a common timing source, a clock, then the time-of-flight of an acoustic signal can found using a correlation of the acoustic signal received by a speaker of an acoustic transceiver the with a template of the transmitted acoustic signal. The peak of the correlation is then a measurement of the delay, $\tau$ incurred by the propagated acoustic signal over a distance d = $\tau$/c, where d is the distance and c is the speed of sound.

For example, the instantaneous frequency, $f(t)$, is a linear function of time

$$f(t) = f_0 + kt,$$

wherein $f_0$ is the intial starting frequency of the signal and the constant $k$ depends on the final frequency, $f_1$ and the

duration of the signal, *T, k* can be expressed as $k = \dfrac{f_1 - f_0}{T}$.

Some embodiments use the following definition of the transmitted acoustic signal:

$$s(t) = \sin\left[\phi_0 + 2\pi\left(f_0 t + \frac{k}{2}t^2\right)\right] = \sin\left[\phi_0 + 2\pi\left(f_0 t + \frac{(f_1 - f_0)}{2T}t^2\right)\right] \text{ for } t \le T,$$

wherein $\phi_0$ is an arbitrary phase and the last expression is obtained by replacing *k* with its definition. The signal, *s(t)*, sweeps its instanteous frequency from $f_0$ to $f_1$ over a duration *T* seconds. For example, for the case of $f_1$ = 10 kHz, $f_0$ = 100 Hz and the duration *T* = 0.01 seconds. In this case $k = \dfrac{f_1 - f_0}{T}$ takes a positive value since $f_1 > f_0$ and the signal, *s(t)*, is reffered to as an 'up-chirp' as the instantaneous frequency increases with increasing time. Some embodiments of the invention use an active ranging or a passive ranging to determine the range or distance between the objects, e.g., the AP 110 and the device 120.

Figure IE shows a block diagram of a method registering a location of a device with a floor plan of an indoor space according to one embodiment of the invention. Steps of the method can be performed, at least in part, by a processor 199. The method determines 170 a portion 175 of the floor plan specifying a coarse location of the device using strength 171 of WiFi signals received from at least three access points (APs) 172, wherein a location of each AP is registered 174 with the floor plan 173. The method also determines 180 at least one distance 185 between the device and at least one object 195 registered with the floor plan using a time-of-flight of at least one acoustic signal.

In one embodiment, the object 195 is one of the AP 172 used for determining the coarse position. In this embodiment, the location of the object 195 is known. In alternative embodiment, the object 195 is part of the indoor space, e.g., a wall of the room. This embodiment can actively register the location of the object with the floor plan. For example, the embodiment matches 191 the shape of the object 195 to a shape of an element of the portion of the floor plan175 to register the object with the floor plan. Knowing the distance 185 to the registered object and the portion of the floor plan 175, the embodiment registers 190 the location 192 of the device within the portion of the floor plan at the distance from the object.

In some embodiments, the distance 185 can define multiple locations within the portion of the floor plan 175. In one embodiment, the variations among multiple locations are within the target accuracy of localization. This embodiment can select any of the multiple locations as the location 192. Additionally or alternatively, the embodiment can select the location 192 as a function of the multiple locations, e.g., an average function.

In different embodiment, multiple determinations of the distance 185 are performed for different objects 195. For example, two or more APs and/or two or more walls can be used to determine two or more distances to the device and to more accurately determine the location 192 using, e.g., a triangulation.

Figure 1F shows a block diagram of an exemplar method for determining 180 multiple distances to the device from multiple objects and registering 190 the location of the device using the multiple distances according to one embodiment of the invention. The method determines 196 a first distance between the device and a first object located at a first location registered with the floor plan and determines 197 a second distance between the device and a second object located at a second location registered with the floor plan. In addition, the method registers 190 the location of the device by determining 193, within the portion of the floor plan, a location of an intersection of a first circle of the first radius centered on the first location and a second circle of the second radius centered the second location, and by registering 194 the location of the device at the location of the intersection.

Figure 2 shows a block diagram of a device 200 according to some embodiments of the invention. The device 200 can employ the principles of different embodiments of the invention for determining and/or tracking its location and/or performing various control function in dependence of the location.

The device 200 includes a WiFi transceiver 205 configured to determine strength levels of signals received at the current location, wherein the signals are transmitted by a set of access points (APs) arranged in an environment. For example, the device can include a radio part 201 having one or more antennas 203 coupled to a radio transceiver 205 including an analog RF part and/or a digital modem. The radio part thus implements the physical layer (the PHY). The digital modem of PHY 201 is coupled to a media access control (MAC) processor 207 that implements the MAC processing of the station. The MAC processor 207 is connected via one or more busses, shown symbolically as a single bus subsystem 211, to a host processor 213. The host processor includes a memory subsystem 215, e.g., random access memory (RAM) and/or read only memory (ROM) connected to a bus.

The device 200 can also include an acoustic transceiver 221 configured to transmit and to receive acoustic signals. The acoustic transceiver determines at least one distance between the device and at least one object registered with the floor plan using a time-of-flight of an acoustic signal. To that end, the acoustic transceiver 221 can include one or multiple of speakers and microphones. In some embodiments, the acoustic signals are signals that are audible to the human ear, i.e., having a frequency less than 20 kilohertz. In alternative embodiments, the acoustic signals are any other sound wave even those in the ultrasonic bands above 20 kilohertz.

In one embodiment, the MAC processing, e.g., the IEEE 802.11 MAC protocol is implemented totally at the MAC processor 207. The processor 207 includes a memory 209 that stores the instructions for the MAC processor 207 to implement the MAC processing, and in one embodiment, some or all of the additional processing used by the present invention. The memory is typically but not necessarily a ROM and the software is typically in the form of firmware.

The MAC processor is controlled by a processor, such as the host processor 213. In one embodiment, some of the MAC processing is implemented at the MAC processor 207, and some is implemented at the host. In such a case, the instructions for the host 213 to implement the host-implemented MAC processing are stored in the memory 215. In one embodiment, some or all of the additional processing used by the present invention is also implemented by the host. These instructions are shown as part 217 of memory.

The processor can determine a portion of the floor plan specifying a coarse location of the device using the strengths of the received WiFi signals received from the APs registered with the floor plan, and to register the location of the device within the portion of the floor at the distance from the object. The floor plan can be stored 219 in the memory 215.

The components of radio management include radio measurement in managed APs and their clients. One embodiment uses the IEEE 802.11 h standard that modifies the MAC protocol by adding transmission power control (TPC) and dynamic frequency selection (DFS). TPC limits the transmitted power to the minimum needed to reach the furthest user. DFS selects the radio channel at an AP to minimize interference with other systems, e.g., radar.

Another embodiment uses a protocol that differs from the current 802.11 standard by providing for tasking at the AP and, in turn, at a client to autonomously make radio measurements according to a schedule. In one embodiment, the information reported includes, for each detected AP, information about the detection, and information about or obtained from contents of the beacon/probe response.

While the IEEE 802.11 standard specifies that a relative RSS indication (RSSI) be determined at the physical level (the PHY), one aspect of the invention uses the fact that many modern radios include a PHY that provides relatively accurate absolute RSS measurements. In one embodiment, RSS levels measured at the PHYs are used to determine the location.

Some embodiments of the invention use a model of the indoor environment, e.g., a floor plan of a building, wherein the device 200 is located. The locations of any managed APs in the overall region also are known and provided to the method. For example, one embodiment of the invention constructs or uses a user interface that includes the locations of known access points in the area of interest.

Figure 3A shows one user interface 300 that includes a graphic overlay 303 of a grid of area elements. User interface 300 includes a graphic representation indicating the location of three managed APs, shown as AP1 (305), AP2 (307) and AP3 (309).

Figure 3B shows another user interface 350 that includes in addition to the graphic overlay 303 of the grid and the representation indicating the location of the managed APs 305, 307, and 309, a graphic overlay 311 representing the architectural structure, e.g., as an architectural plan of the interior, e.g., the floor plan of the building. Another user interface (not illustrated) can show the graphic representation of the floor architecture, but no grid. Thus, one embodiment makes possible to view the location of the APs on a two-dimensional screen.

Example of Augmented Localization using Active Ranging

Some embodiments of the invention use an active ranging of acoustic signals to augment coarse locating determined using the strength of WiFi signals. According principles of active ranging the distance between two objects is determined via exchange of the acoustic signals transmitted by both devices. For example, in one embodiment, the active ranging is performed between the device 120 and one or multiple of APs 110 used for determining the coarse location.

Figure 4 shows a schematic of a structure 410 of an AP and/or the device for active ranging according to one embodiment of the invention. The structure includes a processor 401 responsible for performing correlations on the acoustic signals as well as other signal processing operations related to the generation and transmission of the acoustic signals. The processor is connected to a microphone 402, which provide access to digitized versions of the sound detected by the microphone sensors, e.g., through a D/A converter 403. Additionally, the processor can drive a speaker 404 to transmit the acoustic signals. The processor has access to a WiFi radio 406, which can be used to provide data and timestamps used in the ranging protocol via messages sent on the wireless channel.

Some embodiments of the invention use a two way time of arrival (TW-TOA) ranging method using the acoustic signals to estimate the time of flight of the signal, $s(t)$, as the signal traverses the distance between the source and destination of the ranging devices.

Figure 5A shows a schematic of the signals exchanged during an active ranging between the two devices, e.g., a device A 510 and a device B 520, according to one embodiment of the invention. Each device has the hardware and processing capabilities shown in Figure 4. One of the devices, e.g., the device 510, initiates the TW-TOA measurement by transmitting 512 the acoustic signal, $s(t)$, from its speaker. The device 510 simultaneously starts 514 a local timer to measure the time duration until the device 510 receives a response from the device 520. At that moment, the device 510 stops 516 the timer.

In one embodiment, the device 510 determines 514 the start time at a time of detecting the first acoustic signal by the microphone of the device and determines 516 the end time at a time of detecting the second acoustic signal by the microphone of the device. Such a determination can be accomplished by allowing the microphone(s) of the device 510 to receive a signal while the speaker simultaneously transmits the acoustic signal. Thus, the device 510 can process any signals received from its microphone by correlating with the transmit signal, $s(t)$.

For example, the device 510 starts its timer when the device detects an audio peak. For example, when the signal coming from microphone and A/D converter is represented by the sequence $y_n$, the processor, 401, can compute the cross correlation with a digital version of $s(t)$, $s_n$ according to

$$r_n = \sum_{m=0}^{N} s_m y_{m+n} \ ,$$

where $r_n$ represents the correlator output and N can be set to a large enough value so as to ensure that the correlation is computed over a portion of the received signal, $y_n$, where a response is expected. The correlator output then contains information about the arrivals of the signal $s(t)$.

Upon receiving the acoustic signal from the device 510, the device 520 transmits 524 a locally generated version of $s(t)$ back to the device 510. Additionally, the device 520 starts 522 its own local timer whose purpose is to provide a measurement of the delay between the arrival of the signal from the device 510 and the transmission of its response. Similar to the device 510, the device 520 can overhear its own transmission and can stop its local timer to measure this delay. The delay is also transmitted to the device 510, e.g., via WiFi channel.

The device 510 stops its timer upon detecting the returning acoustic signal from the device 520. Thus, the device 510 determines a value in its timer caused by the two-way round trip time and any delay incurred at the device 520 to its response. The active ranging time $t_A$ can be expressed as

$$t_A = 2 * \tau_f + \tau_{delay} \ ,$$

where $\tau_f$ is the actual time of flight of the signal, s(t), over the air and $\tau_{delay}$ is the time spent by the device 520 to detect the arrival of the signal, to generate and to transmit its response back to the device 510. Accordingly, the device 510 can determine the distance $d_{AB}$ between the device 510 and the device 520 according to

$$d_{AB} = \frac{t_A - \tau_{delay}}{2c_s},$$

wherein the $c_s$ is a speed of propagation of the acoustic signal.

Figure 5B shows a block diagram of a method performed by a device for determining the distance using an active ranging according to one embodiment. The embodiment transmits 530 a first acoustic signal from a speaker of the device at a start time, and receives 540 a second acoustic signal by a microphone of the device at an end time. The second acoustic signal is transmitted by the object in response to receiving the first acoustic signal. The embodiment also receives 550, via a WiFi transceiver of the device, a delay period specifying a time delay between receiving the first acoustic signal at the object and transmitting by the object the second acoustic signal and determines 560 the time-of-flight of the acoustic signal as a time between the start time and the end time reduced by the delay period.

Example of Augmented Localization using Passive Ranging

Some embodiments of the invention are based on a realization that it is not always possible to rely on active ranging requiring cooperative processing of multiple devices. Accordingly, some embodiments of the invention use the passive ranging accomplished by transmitting acoustic signals and detecting the echoes that return from walls and other structures near the transmitting device. In this case, the use of the acoustic signals provides the locations of walls, doorways and hallways that are used in improving the accuracy of the localization of the device. However, because there is typically only a single device (the transmitter and receiver are collocated), it is difficult to obtain an accurate position of a reflector using a single (omni- directional) microphone. Thus, some embodiments use multiple microphones to enable the measurement of both the distance and the angle to a reflecting object.

Figure 6 shows a schematic of a structure 610 of the device performing the passive ranging according to some embodiments of the invention. The structure includes a processor 601 responsible for performing correlations on the acoustic signals as well as other signal processing operations related to the generation and transmission of the acoustic signals. The processor can drive a speaker 404 to transmit the acoustic signals and has access to a WiFi radio 406. The processor is connected to microphones 602 and 612, which provide access to digitized versions of the sound detected by the microphone sensors, e.g., through D/A converters 603 and 613. The distance $d_m$ 620 between the two microphones is known.

The structure 610 of the augmented WiFi device is similar to the structure 410 except with the addition of multiple receiver chains (microphones and A/D converters). While other embodiment use an array of more than two microphones, one embodiment can determine reasonable accuracy of the angle of incidence of the sound wave with just two microphones. Specifically, an error of 3-10 degrees can be expected.

Figure 7 shows a block diagram of a method for determining the distance using a passive ranging according to one embodiment of the invention. The method transmits 710 the acoustic signal from a speaker of the device at a start time. The method receives 720, by a first microphone of the device, a first reflection of the acoustic signal from the object at a first time and receives 730, by a second microphone of the device, a second reflection of the acoustic signal from the object at a second time.

The method determines 740 a first distance to the object using a time-of-flight of the first reflection of the acoustic signal between the start time and the first end time and also determines 750 a second distance to the object using a time-of-flight of the second reflection of the acoustic signal between the start time and the second end time. Next, the method determines 760 the distance between the device and the object and an angle of a direction from the device to the object using the first distance, the second distance and a distance between the first and the second microphones.

For example, the transmitted 710 signal, $s(t)$, is reflected from some object and then is received 720 and 730 by the two microphones. The received signal at the $i^{th}$ microphone ($i =1,2$) is given by

$$y^i(t) = s\left(t + \frac{2*d_i}{c}\right) + n(t)\,, \ i = 1,2,$$

where $d_i$ is the distance from the reflecting object to the $i^{th}$ microphone and $c$ is again the propagation speed of sound.

The delay $\left(\frac{2*d_i}{c}\right)$ at each microphone array element is distance dependent. Due to the spacing between the microphone elements each delay is different leading to a phase shift between the received signals, $y^i(t)$.

In general there can be many echoes that are received as each wall and object in an environment reflects some of the sound wave energy back towards the microphone array. To that end, one embodiment expresses the received signal at each microphone as the super positon of many echoes as follows

$$y^i(t) = \sum_{n=1}^{N} s\left(t + \frac{2*d_n}{c}\right) + n_i(t),$$

where the variable n indexes the echoes. Notably, the distances traveled by the echoes, $d_n$ are a function of both the distance from the center of the array and the angle of arrival of the echo at each microphone.

Figure 8 shows a schematic of a search for both the distance and the angle of arrival of each echo received at the microphones according to one embodiment of the invention to determine. Figure 8 shows the area 800 where each object can be located in a polar grid, with the center point 810 of the grid at the center of a liner array of microphones, e.g., between two microphones 602 and 612 located at angles of 0 degrees and $\pi$ radians (= 180 degrees) at a distance of $d_m/2$ meters from the center. The grid is discretized in both distance with a step size of $\Delta r$ and in angle with a step size of $\Delta\theta$. Each location of the grid can be described with a pair values $(r,\theta)$, corresponding to a distance from the center and angle from array's axis.

When the reflection of the acoustic signal originates at a location on the grid then each microphone detects that reflection at a slightly different time depending on the $(r,\theta)$, values. The phase difference between the reflections is dependent only on the different path lengths. Thus for a reflecting object located at grid location $(r,\theta)$ the total path

travelled from the center of the array to microphone 602 is

$$r^{(1)} = r + \sqrt{r^2 + (d_m/2) - 2rd_m\cos(\theta)} .$$

Similarly the total path travelled from the center of the array to microphone 612 is

$$r^{(2)} = r + \sqrt{r^2 + (d_m/2)^2 + 2rd_m\cos(\theta)}.$$

Thus the phase difference between each microphone is proportional to path difference

$$\Delta d = \sqrt{r^2 + (d_m/2)^2 + 2rd_m\cos(\theta)} - \sqrt{r^2 + (d_m/2) - 2rd_m\cos(\theta)} ,$$

where $d_m$ is the separation distance between the microphones.

Using this dependence between the phase difference and the angular offset, some embodiments locate multiple reflecting objects on the grid 800. For example, one embodiment first finds the delay and angle of a (synthetic) incoming signal that leads to the highest correlation with the actually received signals at the antenna elements. This delay and angle are then interpreted as delay and angle of the strongest multipath component. The contribution of such a multipath component is then subtracted from the received signal, and the process is repeated by finding the correlation peak with the modified ("cleaned up") signal. This process is repeated until the residual signal fulfills certain criteria such as having energy below a certain threshold. If the acoustic signal has a very large relative bandwidth (e.g., 10 Hz to 10 KHz), the embodiment can achieve not only high resolution in the delay domain, but also in the angular domain even when the number of microphones and/or loudspeakers is very small (e.g., two).

Some embodiments of the invention receiving multiple reflections of the acoustic signal reflected from different points on a surface of the object. The result of processing the reflections produces a set of reflecting object locations and angles $(r, \theta)$. This data can be clustered and used to determine the locations of large structures such as walls, tables, desks. The clustering can be accomplished k-means clustering or SVM (support vector machine) methods to classify which subsets of the data points are from the same object. The data set $(r, \theta)$ can be partitioned into clusters reflecting the shape of the objects.

Figure 9 shows a block diagram of a method for registering the object with the floor plan according to some embodiments of the invention. The method receives 910 multiple reflections of the acoustic signal reflected from different points on a surface of the object, and determines 920 locations of the different points of the object with respect to the device. The method clusters 930 the locations to determine a shape of the object and matches 940 the shape of the object to a shape of an element of the portion of the floor plan to register the object with the floor plan.

For example, the locations of the objects such as walls can be determined, via regression methods. The objects can be identified from the partitioned data according to various criteria. One such criterion is the proportion of data points that are assigned to the cluster. For example, if the size of the original data set is $S$, then a subset of data corresponding to a cluster can be considered as belonging to a large object if the ratio $S_i/S$ is larger than some threshold, where $S_i$ is the size of the $i^{th}$ cluster.

Figure 10 shows an exemplar data set representing the locations of the different points of the object with respect to the device according to one embodiment. In this example, the device is located in a room at a distance of 3 meters from the right (eastern) wall and a distance of 3.5 meters from the top (northern) wall. The data can be clustered in to two subsets, $S_1$ 1010, and $S_2$ 1020. After the data are clustered and the objects are identified and a regression can be performed on each cluster to determine the line that best fits the subset of data.

The above-described embodiments of the present invention can be implemented in any of numerous ways. For example, the embodiments may be implemented using hardware, software or a combination thereof. When implemented in software, the software code can be executed on any suitable processor or collection of processors, whether provided in a single computer or distributed among multiple computers. Such processors may be implemented as integrated circuits, with one or more processors in an integrated circuit component. Though, a processor may be implemented using circuitry in any suitable format.

Also, the embodiments of the invention may be embodied as a method, of which an example has been provided. The acts performed as part of the method may be ordered in any suitable way. Accordingly, embodiments may be constructed in which acts are performed in an order different than illustrated, which may include performing some acts simultaneously, even though shown as sequential acts in illustrative embodiments.

Use of ordinal terms such as "first," "second," in the claims to modify a claim element does not by itself connote any priority, precedence, or order of one claim element over another or the temporal order in which acts of a method are performed, but are used merely as labels to distinguish one claim element having a certain name from another element having a same name (but for use of the ordinal term) to distinguish the claim elements.

**Claims**

1. A method for registering a location of a device with a floor plan of an indoor space, comprising:

   determining (170) a portion of the floor plan specifying a coarse location of the device using strength of WiFi signals received from at least three access points (APs),
   wherein a location of each AP is registered with the floor plan;
   determining (180) at least one distance between the device and at least one object registered with the floor plan using a time-of-flight of at least one acoustic signal; and
   registering (190) the location of the device within the portion of the floor plan at the distance from the object,
   wherein at least some steps of the method are performed using a processor, **characterized in that** determining (180) the distance comprises:

      transmitting (710) the acoustic signal from a speaker of the device at a start time;
      receiving (720), at a first time by a first microphone of the device, a first reflection of the acoustic signal from the object;
      receiving (730), at a second time by a second microphone of the device, a second reflection of the acoustic signal from the object;
      determining (740) a first distance to the object using a time-of-flight of the first reflection of the acoustic signal between the start time and the first end time;
      determining (750) a second distance to the object using a time-of-flight of the second reflection of the acoustic signal between the start time and the second end time; and
      determining (760) the distance between the device and the object and an angle of a direction from the device to the object using the first distance, the second distance and a distance between the first and the second microphones,
      wherein the method further comprising:

         receiving (910) multiple reflections of the acoustic signal reflected from different points on a surface of the object;
         determining (920) locations of the different points of the object with respect to the device;
         clustering (930) the locations to determine a shape of the object; and
         matching (940) the shape of the object to a shape of an element of the portion of the floor plan to register the object with the floor plan.

2. The method of claim 1, wherein the determining (180) the distance comprises:

   determining (196) a first distance between the device and a first object located at a first location registered with the floor plan; and
   determining (197) a second distance between the device and a second object located at a second location registered with the floor plan; and wherein the registering (190) comprises:

      determining (193), within the portion of the floor plan, a location of an intersection of a first circle of the first radius centered on the first location and a second circle of the second radius centered the second location; and
      registering (194) the location of the device at the location of the intersection.

3. A device, comprising:

   a WiFi transceiver (205) to transmit and to receive WiFi signals, and to determine strength of at least three WiFi signals received from at least three access points (APs),
   wherein a location of each AP is registered with the floor plan;

an acoustic transceiver (221) to transmit and to receive acoustic signals, the acoustic transceiver (221) determines (180) at least one distance between the device and at least one object registered with the floor plan using a time-of-flight of an acoustic signal; and

a processor (207, 213) to determine (170) a portion of the floor plan specifying a coarse location of the device using the strengths of the received WiFi signals received from the APs registered with the floor plan, and to register (190) the location of the device within the portion of the floor at the distance from the object, **characterized in that** the acoustic transceiver (221) determines the distance by executing steps comprising:

transmitting (710) the acoustic signal from a speaker of the device at a start time;

receiving (720), at a first time by a first microphone of the device, a first reflection of the acoustic signal from the object;

receiving (730), at a second time by a second microphone of the device, a second reflection of the acoustic signal from the object;

determining (740) a first distance to the object using a time-of-flight of the first reflection of the acoustic signal between the start time and the first end time;

determining (750) a second distance to the object using a time-of-flight of the second reflection of the acoustic signal between the start time and the second end time; and

determining (760) the distance between the device and the object and an angle of a direction from the device to the object using the first distance, the second distance and a distance between the first and the second microphones,

wherein the acoustic transceiver (221) registers the object with the floor plan by executing steps comprising:

receiving (910) multiple reflections of the acoustic signal reflected from different points on a surface of the object;

determining (920) locations of the different points of the object with respect to the device;

clustering (930) the locations to determine a shape of the object; and

matching (940) the shape of the object to a shape of an element of the portion of the floor plan to register the object with the floor plan.

4. The device of claim 3, wherein the acoustic transceiver (221) includes a speaker to transmit the acoustic signal and a microphone to receive at least one reflection of the acoustic signal.

**Patentansprüche**

1. Verfahren zum Registrieren eines Standorts einer Einrichtung mit einem Grundrissplan eines Innenraums, umfassend:

Bestimmen (170) eines Abschnitts des Grundrissplans, spezifizierend einen groben Standort der Einrichtung, unter Verwendung der Stärke von WiFi-Signalen, die von zumindest drei Zugriffspunkten (APs) empfangen werden,

wobei eine Position jedes AP mit dem Grundrissplan registriert ist;

Bestimmen (180) zumindest eines Abstands zwischen der Einrichtung und zumindest einem Objekt, das mit dem Grundrissplan registriert ist, unter Verwendung einer Time-of-Flight von zumindest einem akustischen Signal; und Registrieren (190) des Standorts der Einrichtung innerhalb des Abschnitts des Grundrissplans in dem Abstand zu dem Objekt, wobei zumindest einige Schritte des Verfahrens unter Verwendung eines Prozessors durchgeführt werden,

**dadurch gekennzeichnet, dass** das Bestimmen (180) des Abstandes umfasst:

Übertragen (710) des akustischen Signals von einem Lautsprecher der Einrichtung zu einer Startzeit;

Empfangen (720), zu einem ersten Zeitpunkt durch ein erstes Mikrofon der Einrichtung, einer ersten Reflexion des akustischen Signals von dem Objekt;

Empfangen (730), zu einem zweiten Zeitpunkt durch ein zweites Mikrofon der Einrichtung, einer zweiten Reflexion des akustischen Signals von dem Objekt;

Bestimmen (740) eines ersten Abstands zu dem Objekt unter Verwendung einer Time-of-Flight von der ersten Reflexion des akustischen Signals zwischen der Startzeit und der ersten Endzeit;

Bestimmen (750) eines zweiten Abstands zu dem Objekt unter Verwendung einer Time-of-Flight von der zweiten Reflexion des akustischen Signals zwischen der Startzeit und der zweiten Endzeit; und

Bestimmen (760) des Abstands zwischen der Einrichtung und dem Objekt und eines Winkels einer Richtung von der Einrichtung zu dem Objekt unter Verwendung des ersten Abstands, des zweiten Abstands und eines Abstands zwischen dem ersten und dem zweiten Mikrofon,
wobei das Verfahren ferner umfasst:

Empfangen (910) mehrerer Reflexionen des akustischen Signals, das von verschiedenen Punkten auf einer Oberfläche des Objekts reflektiert wird;
Bestimmen (920) von Positionen der verschiedenen Punkte des Objekts in Bezug auf die Einrichtung;
Clustern (930) der Positionen, um eine Form des Objekts zu bestimmen; und
Abgleichen (940) der Form des Objekts mit einer Form eines Elements des Abschnitts des Grundrissplans, um das Objekt mit dem Grundrissplan zu registrieren.

2. Verfahren nach Anspruch 1, wobei das Bestimmen (180) des Abstands umfasst: Bestimmen (196) eines ersten Abstands zwischen der Einrichtung und einem ersten Objekt, das sich an einem ersten Standort befindet, der mit dem Grundrissplan registriert ist; und
Bestimmen (197) eines zweiten Abstands zwischen der Einrichtung und einem zweiten Objekt, das sich an einem zweiten Standort befindet, die mit dem Grundrissplan registriert ist; und wobei das Registrieren (190) umfasst:

Bestimmen (193), innerhalb des Abschnitts des Grundrissplans, einer Position eines Schnittpunkts eines ersten Kreises mit dem ersten Radius, der auf der ersten Position zentriert ist, und eines zweiten Kreises mit dem zweiten Radius, der auf der zweiten Position zentriert ist; und
Registrieren (194) des Standorts der Einrichtung an der Position des Schnittpunkts.

3. Einrichtung, umfassend:

einen WiFi-Transceiver (205), um WiFi-Signale zu übertragen und zu empfangen, und eine Stärke von zumindest drei WiFi-Signalen, die von zumindest drei Zugriffspunkten (APs) empfangen werden, zu bestimmen, wobei eine Position jedes APs mit dem Grundrissplan registriert ist;
einen akustischen Transceiver (221), um akustische Signale zu übertragen und zu empfangen, wobei der akustische Transceiver (221) zumindest einen Abstand zwischen der Einrichtung und zumindest einem mit dem Grundrissplan registrierten Objekt bestimmt (180) unter Verwendung einer Time-of-Flight von einem akustischen Signal; und
einen Prozessor (207, 213), um einen Abschnitt des Grundrissplans, spezifizierend einen groben Standort der Einrichtung, zu bestimmen (170) unter Verwendung der Stärken der empfangenen WiFi-Signale, die von den mit dem Grundriss registrierten APs empfangen werden, und den Standort der Einrichtung innerhalb des Abschnitts des Grundrissplans in dem Abstand von dem Objekt zu registrieren (190),
**dadurch gekennzeichnet, dass** der akustische Transceiver (221) den Abstand bestimmt durch Ausführen von Schritten, umfassend:

Übertragen (710) des akustischen Signals von einem Lautsprecher der Einrichtung zu einer Startzeit;
Empfangen (720), zu einem ersten Zeitpunkt durch ein erstes Mikrofon der Einrichtung, einer ersten Reflexion des akustischen Signals von dem Objekt;
Empfangen (730), zu einem zweiten Zeitpunkt durch ein zweites Mikrofon der Einrichtung, einer zweiten Reflexion des akustischen Signals von dem Objekt;
Bestimmen (740) eines ersten Abstands zu dem Objekt unter Verwendung einer Time-of-Flight von der ersten Reflexion des akustischen Signals zwischen der Startzeit und der ersten Endzeit;
Bestimmen (750) eines zweiten Abstands zu dem Objekt unter Verwendung einer Time-of-Flight von der zweiten Reflexion des akustischen Signals zwischen der Startzeit und der zweiten Endzeit; und
Bestimmen (760) des Abstands zwischen der Einrichtung und dem Objekt und eines Winkels einer Richtung von der Einrichtung zu dem Objekt unter Verwendung des ersten Abstands, des zweiten Abstands und eines Abstands zwischen dem ersten und dem zweiten Mikrofon,
wobei der akustische Transceiver (221) das Objekt mit dem Grundrissplan registriert durch Ausführen der Schritte, umfassend:

Empfangen (910) mehrerer Reflexionen des akustischen Signals, das von verschiedenen Punkten auf einer Oberfläche des Objekts reflektiert wird;
Bestimmen (920) von Positionen der verschiedenen Punkte des Objekts in Bezug auf die Einrichtung;
Clustern (930) der Positionen, um eine Form des Objekts zu bestimmen; und

Abgleichen (940) der Form des Objekts mit einer Form eines Elements des Abschnitts des Grundrissplans, um das Objekt mit dem Grundrissplan zu registrieren.

**4.** Einrichtung nach Anspruch 3, wobei der akustische Transceiver (221) einen Lautsprecher, um das akustische Signal zu übertragen, und ein Mikrofon, um zumindest eine Reflexion des akustischen Signals zu empfangen, umfasst.

## Revendications

**1.** Procédé d'enregistrement d'un emplacement d'un dispositif avec un plan d'étage d'un espace intérieur, comprenant au moins des étapes consistant à :

déterminer (170) une partie du plan d'étage spécifiant un emplacement approximatif du dispositif en utilisant une intensité de signaux WiFi reçus en provenance d'au moins trois points d'accès (AP),
dans lequel un emplacement de chaque point AP est enregistré avec le plan d'étage ;
déterminer (180) au moins une distance entre le dispositif et au moins un objet enregistré avec le plan d'étage, en utilisant un temps de vol d'au moins un signal acoustique ; et enregistrer (190) l'emplacement du dispositif dans la partie du plan d'étage à la distance de l'objet, dans lequel au moins certaines étapes du procédé sont mises en œuvre en utilisant un processeur ;
**caractérisé en ce que** l'étape de détermination (180) de la distance comprend les étapes ci-dessous consistant à :

transmettre (710) le signal acoustique, à partir d'un haut-parleur du dispositif, à un instant de début ;
recevoir (720), à un premier instant, par le biais d'un premier microphone du dispositif, une première réflexion du signal acoustique en provenance de l'objet ;
recevoir (730), à un second instant, par le biais d'un second microphone du dispositif, une seconde réflexion du signal acoustique en provenance de l'objet ;
déterminer (740) une première distance jusqu'à l'objet en utilisant un temps de vol de la première réflexion du signal acoustique entre l'instant de début et le premier instant de fin ;
déterminer (750) une seconde distance jusqu'à l'objet en utilisant un temps de vol de la seconde réflexion du signal acoustique entre l'instant de début et le second instant de fin ; et
déterminer (760) la distance entre le dispositif et l'objet, et un angle d'une direction du dispositif à l'objet, en utilisant la première distance, la seconde distance et une distance entre les premier et second microphones,
dans lequel le procédé comprend en outre les étapes ci-dessous consistant à :

recevoir (910) de multiples réflexions du signal acoustique réfléchi à partir de différents points sur une surface de l'objet ;
déterminer (920) des emplacements des différents points de l'objet par rapport au dispositif ;
regrouper (930) les emplacements en vue de déterminer une forme de l'objet ; et
mettre en correspondance (940) la forme de l'objet avec une forme d'un élément de la partie du plan d'étage pour enregistrer l'objet avec le plan d'étage.

**2.** Procédé selon la revendication 1, dans lequel l'étape de détermination (180) de la distance comprend au moins des étapes consistant à : déterminer (196) une première distance entre le dispositif et un premier objet situé à un premier emplacement enregistré avec le plan d'étage ; et
déterminer (197) une seconde distance entre le dispositif et un second objet situé à un second emplacement enregistré avec le plan d'étage ; et dans lequel l'étape d'enregistrement (190) comprend au moins des étapes consistant à :

déterminer (193), dans la partie du plan d'étage, un emplacement d'une intersection d'un premier cercle du premier rayon centré sur le premier emplacement et d'un second cercle du second rayon centré sur le second emplacement ; et
enregistrer (194) l'emplacement du dispositif à l'emplacement de l'intersection.

**3.** Dispositif, comprenant :

un émetteur-récepteur WiFi (205) destiné à émettre et à recevoir des signaux WiFi, et à déterminer une intensité d'au moins trois signaux WiFi reçus en provenance d'au moins trois points d'accès (AP), dans lequel un emplacement de chaque point AP est enregistré avec le plan d'étage ;

un émetteur-récepteur acoustique (221) destiné à émettre et à recevoir des signaux acoustiques, dans lequel l'émetteur-récepteur acoustique (221) détermine (180) au moins une distance entre le dispositif et au moins un objet enregistré avec le plan d'étage, en utilisant un temps de vol d'un signal acoustique ; et

un processeur (207, 213) destiné à déterminer (170) une partie du plan d'étage spécifiant un emplacement approximatif du dispositif, en utilisant les intensités des signaux WiFi reçus en provenance des point AP enregistrés avec le plan d'étage, et à enregistrer (190) l'emplacement du dispositif dans la partie du plan d'étage à la distance de l'objet,

**caractérisé en ce que** l'émetteur-récepteur acoustique (221) détermine la distance en exécutant au moins des étapes consistant à :

transmettre (710) le signal acoustique, à partir d'un haut-parleur du dispositif, à un instant de début ;

recevoir (720), à un premier instant, par le biais d'un premier microphone du dispositif, une première réflexion du signal acoustique en provenance de l'objet ;

recevoir (730), à un second instant, par le biais d'un second microphone du dispositif, une seconde réflexion du signal acoustique en provenance de l'objet ;

déterminer (740) une première distance jusqu'à l'objet en utilisant un temps de vol de la première réflexion du signal acoustique entre l'instant de début et le premier instant de fin ;

déterminer (750) une seconde distance jusqu'à l'objet en utilisant un temps de vol de la seconde réflexion du signal acoustique entre l'instant de début et le second instant de fin ; et

déterminer (760) la distance entre le dispositif et l'objet, et un angle d'une direction du dispositif à l'objet, en utilisant la première distance, la seconde distance et une distance entre les premier et second microphones,

dans lequel l'émetteur-récepteur acoustique (221) enregistre l'objet avec le plan d'étage en exécutant des étapes comprenant les étapes ci-dessous consistant à :

recevoir (910) de multiples réflexions du signal acoustique réfléchi à partir de différents points sur une surface de l'objet ;

déterminer (920) des emplacements des différents points de l'objet par rapport au dispositif ;

regrouper (930) les emplacements en vue de déterminer une forme de l'objet ; et

mettre en correspondance (940) la forme de l'objet avec une forme d'un élément de la partie du plan d'étage pour enregistrer l'objet avec le plan d'étage.

4. Dispositif selon la revendication 3, dans lequel l'émetteur-récepteur acoustique (221) inclut un haut-parleur destiné à transmettre le signal acoustique et un microphone destiné à recevoir au moins une réflexion du signal acoustique.

FIG. 1A

FIG. 1B

**FIG. 1C**

FIG. 1D

```
                                            174
       ┌─────────────────┐  172         ╭────────╮   173  ┌─────────────────┐
       │                 │ ╭──          ╲            ╭──   │                 │
       │  Registered AP  │◄─────────────────────────────► │   Floor plan    │
       │                 │                                 │                 │
       └────────┬────────┘    171  ┌──────────────────┐ ╭─ 170 └─────────────────┘
                │            ╭──    │   determining    │ ╲
                └────────────────►  │ portion of floor │──────────────┐
                                    │       plan       │              │
                                    └─────────┬────────┘              ▼
                                              │            ┌──────────────────────┐
        199                                   │            │   Portion of the     │
       ════                                   │         ╭─ │ floor plan (coarse    │
         ╭────────►                           │   180   ╲  │      location)        │
                                              │  ╭──  175   └──────────┬───────────┘
         185                                  ▼                        │       ▲
        ╭──      ┌──────────────────────────────────┐                 │       │
        ╲        │      determining distance         │◄────────────────┘     191
                 │     between device and object     │                    ╭──  │
       ┌─────────┤                                   │       195           ╲   │
       │         └─────────────────┬─────────────────┘      ╭──                │
       │ Distance to │             │                        ╲                  ▼
       │ the object  │             │             190  ┌──────────────────────────┐
       └──────┬──────┘             │            ╭──   │                          │
              │                    ▼            ╲     │      Object (AP)         │
              │         ┌──────────────────────┐      │                          │
              └────────►│  registering location │◄─────└──────────────────────────┘
                        └───────────┬──────────┘
                                    │
                                    ▼  ╭── 192
```

# FIG. 1E

EP 3 371 620 B1

```
                                                    ┌────────────────────────┐
                                                    │      determining       │ ⟋ 196
                                     180            │ first distance between  │
                                      ⟍             │ device and first object │
                    ┌────────────────────────┐      └────────────────────────┘
                    │  determining distance  │
                    │   between device and   │
                    │        object          │
                    └────────────────────────┘      ┌────────────────────────┐
                                                    │  determining second    │ ⟋ 197
                                                    │ distance between device │
                                                    │   and second object    │
                                                    └────────────────────────┘

                                                    ┌────────────────────────┐
                                     190            │     determining        │ ⟋ 193
                                      ⟍             │ intersections of distance│
                                                    │        circles         │
                    ┌────────────────────────┐      └────────────────────────┘
                    │  registering location  │
                    └────────────────────────┘
                                                    ┌────────────────────────┐
      FIG. 1F                                       │  determining second    │ ⟋ 194
                                                    │ distance between device │
                                                    │   and second object    │
                                                    └────────────────────────┘
```

**FIG. 1F**

**FIG. 2**

EP 3 371 620 B1

FIG. 3A

**FIG. 3B**

FIG. 4

**FIG. 5A**

EP 3 371 620 B1

transmitting a first
acoustic signal 530

↓

receiving a second
acoustic signal 540

↓

receiving, via a WiFi
transceiver of the
device, a delay period 550

↓

determining the time-
of-flight of the acoustic
signal 560

**FIG. 5B**

EP 3 371 620 B1

**FIG. 6**

EP 3 371 620 B1

```
┌─────────────────────┐
│ transmitting acoustic│ ⟋⟍ 710
│       signal         │
└─────────────────────┘
           │
           ▼
┌──────────────────┐       ┌──────────────────┐
│ receiving first  │ ◄───► │  receiving second│
│ reflection       │       │ reflection of    │ ⟋⟍ 730
│ of acoustic signal│      │ acoustic signal  │
└──────────────────┘       └──────────────────┘
   720                              │
           │                        │
           ▼                        ▼
┌──────────────────┐       ┌──────────────────┐
│ determining first│       │ determining second│ ⟋⟍ 750
│ distance to the  │       │ distance to the  │
│ object           │       │ object           │
└──────────────────┘       └──────────────────┘
   740         │                    │
              └─────────┬───────────┘
                        ▼
            ┌──────────────────────┐
            │ determining distance │ ⟋⟍ 760
            │ and angle of direction│
            │ from device to object│
            └──────────────────────┘
```

## FIG. 7

**FIG. 8**

EP 3 371 620 B1

```
┌─────────────────────────┐
│    receiving multiple   │ ⌒ 910
│       reflections       │
└─────────────────────────┘
             │
             ▼
┌─────────────────────────┐
│   determining locations │
│   of the different points│ ⌒ 920
│        of the object    │
└─────────────────────────┘
             │
             ▼
┌─────────────────────────┐
│   clustering the locations│
│   to determine a shape of│ ⌒ 930
│         the object      │
└─────────────────────────┘
             │
             ▼
┌─────────────────────────┐
│     matching shapes of  │ ⌒ 940
│   object and element of │
│        floor plan       │
└─────────────────────────┘
```

**FIG. 9**

**FIG. 10**

## REFERENCES CITED IN THE DESCRIPTION

### Patent documents cited in the description

- US 2010090899 A1
- WO 2013108243 A1
- US 2008157970 A1

- CN 101526601 A
- US 2014253389 A1
- US 2014269193 A1

### Non-patent literature cited in the description

- Localization of Plane Reflectors Using a Wide-Beamwidth Ultrasound Transducer Arrangement. **MING YANG et al.** IEEE TRANSACTIONS ON INSTRUMENTATION AND MEASUREMENT. IEEE SERVICE CENTER, 01 June 1997, vol. 46

- MOBILE ROBOT RELOCATION FROM ECHOLOCATION CONSTRAINTS. **JONG HWAN LIM et al.** IEEE TRANSACTIONS ON PATTERN ANALYSIS AND MACHINE INTELLIGENCE. IEEE COMPUTER SOCIETY, 01 September 2000, vol. 22, 1035-1041